# EUROPEAN PATENT APPLICATION

(11) **EP 0 868 846 A2**
(43) Date of publication of application: **07.10.1998**
(21) Application number: 98650015.5
(22) Date of filing: 09.03.1998
(51) Int. Cl.: A01K 15/04

(54) **An animal kick restrainer**

(30) Priority: 07.03.1997 IE 970160
(71) Applicant: Edwards, Stanley, Burt, County Donegal (IE); Fleming, James, St. Johnston, County Donegal (IE)
(72) Inventor: Edwards, Stanley, Burt, County Donegal (IE); Fleming, James, St. Johnston, County Donegal (IE)
(74) Representative: Schütte, Gearoid

(57) **Abstract**

A kick restrainer (20) is a generally rigid C-shaped member having two free ends (28, 29) for gripping the hind quarters of an animal. The kick restrainer (20) has a pair of overlapping flap bars (22, 23). A rack (24) is formed on an inside face of one bar (22) and a complementary drive pinion 25 is mounted on the other bar (23) between the bars (22, 23) and is operable for relative sliding movement between the bars (22, 23). An operating handle (26) on the pinion (25) is foldable between the bars (22, 23) when not in use. A bulbous head (28, 29) is provided at an outer free end of each bar (22, 23). Rotation of the drive pinion (25) by means of the operating handle (26) slides the bars (22, 23) relative to each other for adjustment between the free ends (28, 29) of the C-shaped member. Thus, the kick restrainer (20) can be opened for mounting on an animal and then adjusted in situ to the correct position by operation of the rack pinion mechanism.

## Description

The present invention relates to animal kick restrainers.

It has been known for some considerable time that if sufficient pressure is placed on an animal directly behind its rear legs it does not kick, because kicking causes it considerable discomfort.

Various devices have been proposed to operate as kick restrainers and indeed some of these known as kick bars have been produced. However, they suffer from certain disadvantages. Firstly some of them were not adjustable and then others, while adjustable, could not be adjusted in situ. Heretofore such devices have been relatively difficult to use and even more importantly have had relatively short working lives.

Patent Specification No. GB 739842 shows a device for preventing animals from kicking comprising a frame which fits around and surrounds the hind quarters of an animal.

Patent Specification GB 1558243 shows a clamping device for holding the hind quarter of a cow immobile. The clamping device has a pair of pivotally connected clamp bars, free ends of which grip the animal. The free ends of the clamp bars can be pivoted together and apart for adjustment and locked in a set position.

There is a need for a kick restrainer and in particular there is a need for a kick restrainer for cows, for example in milking parlours where certain cows and heifers can be particularly troublesome for the farmer. Often these difficult animals and very often animals at the beginning of their milking life will kick during milking knocking off the claw pieces of the milking machine.

The present invention is directed towards overcoming the problems inherent in the present construction of animal kick restrainers.

### Statement Of Invention

According to the invention there is provided an animal kick restrainer comprising a rigid C-shaped member, having two free ends for engagement across an animal's back and under the body adjacent a rear leg and adjustment means for varying the spacing between the ends.

In one embodiment of the invention, the C-shaped member comprises a pair of overlapping bars with adjustment means engaging between the bars and being operable to slide the bars relative to each other.

In a particularly preferred embodiment, the adjustment means is a rack and pinion mechanism mounted between the bars.

In a further embodiment, the rack is provided on an inner face of one bar with a drive pinion being mounted on the other bar between the bars engaging the rack.

In another embodiment of the invention, the animal kick restrainer comprises a pair of overlapping and contacting flat bars slidable relative to each other, one of the bars having a rack formed thereon and the other having a pinion for engagement with the rack.

In another embodiment, the bars have overlapping flat inner engagement faces.

Preferably a bulbous head is provided at an outer free end of each bar.

In another embodiment of the invention the free ends of the bars are covered with a soft chafe-preventing material such as a resilient cap.

In a particularly preferred embodiment, the drive pinion has an operating handle attached thereto, the operating handle being pivotally attached to the drive pinion for movement between an operating position and a folded stored position against the bars. Preferably, the operating handle is nestable between the bars in the stored position.

### Detailed Description

The invention will be more clearly understood from the following description of some embodiments thereof, given by way of example only with reference to the accompanying drawings in which:-
Fig. 1 is a perspective view of an animal kick restrainer according to the invention;
Fig. 2 is a detailed perspective view of portion of the kick restrainer;
Fig. 3 is a perspective from a different angle of the portion illustrated in Fig. 2;
Fig. 4 is a view of the animal kick restrainer of Figs. 1 to 3 shown in use;
Fig. 5 is a perspective view of another animal kick restrainer; and
Fig. 6 is a sectional view taken along the line VI-VI of Fig. 5.

Referring to the drawings, there is provided an animal kick restrainer indicated generally by the reference numeral 1 which is a generally rigid C-shaped member having two free ends. The animal kick restrainer 1 is formed from a pair of overlapping flat bars 2 and 3. The bar 2 has a rack 4 formed thereon. The bar 3 carries a sleeve 5 which embraces the bar 2 and carries a pinion 6 operated by a handle 7. A further sleeve 8 rigidly mounted on the bar 2 slidably engages the bar 3. The free ends of the bars 2 and 3 are provided with chafe-preventing rubber ends 9.

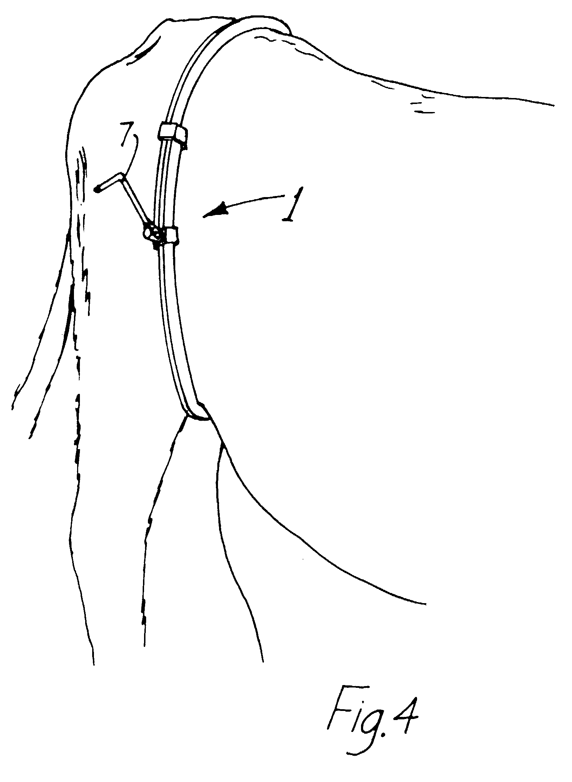

In use, the animal kick restrainer 1 is offered up to an animal, shown offered up to a cow in Fig. 4, and the handle 7 is operated until the right amount of restraining force is exerted on the cow. The milking parlour operator for example can then attach the milking cups of a milking machine to the cow without the possibility of the cow dislodging the cups by kicking. If, during milking, the pressure exerted on the cow by the kick restrainer is too large or too little, the restrainer can be adjusted without any great difficulty by the operator.

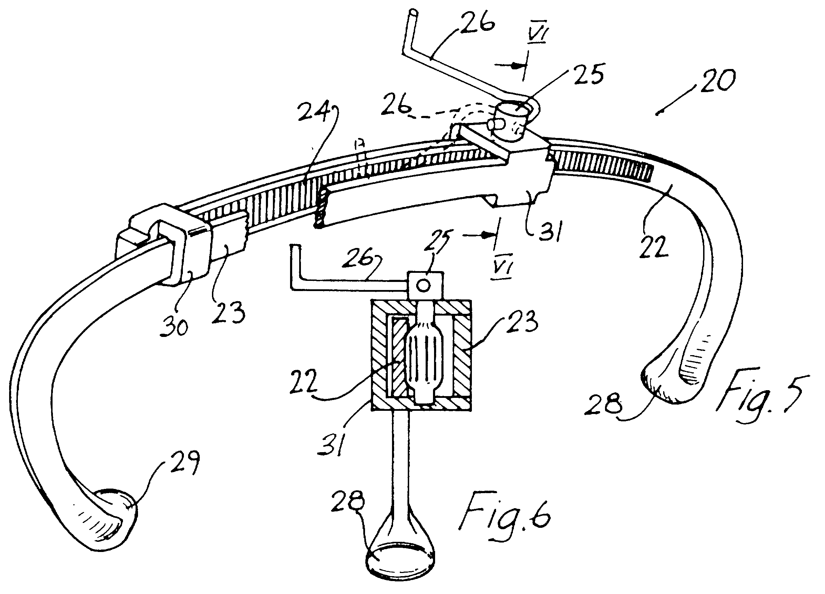

Referring now to Figs. 5 and 6, there is shown another kick restrainer 20. The kick restrainer 20 is a generally rigid C-shaped member having two free ends for gripping the hind quarters of an animal. The kick restrainer 20 is formed from a pair of overlapping flat bars 22 and 23. A sleeve 30, 31 at an inner end of each bar 22, 23 slidably receives the other bar 22,23. It will be noted that in this case the bars 22, 23 are spaced-apart and a rack 24 is formed on an inside face of the bar 22. A drive pinion 25 engages the rack 24 and upon rotation slides the bars 22, 23 relative to each other for adjustment between the free ends of the C-shaped member. An operating handle 26 is pivotally attached to the drive pinion 25 for movement between an operating position and a folded stored position as shown in broken outline in Fig. 5 between the bars 22, 23. In this case, a bulbous head 28, 29 is provided at an outer free end of each bar 22, 23.

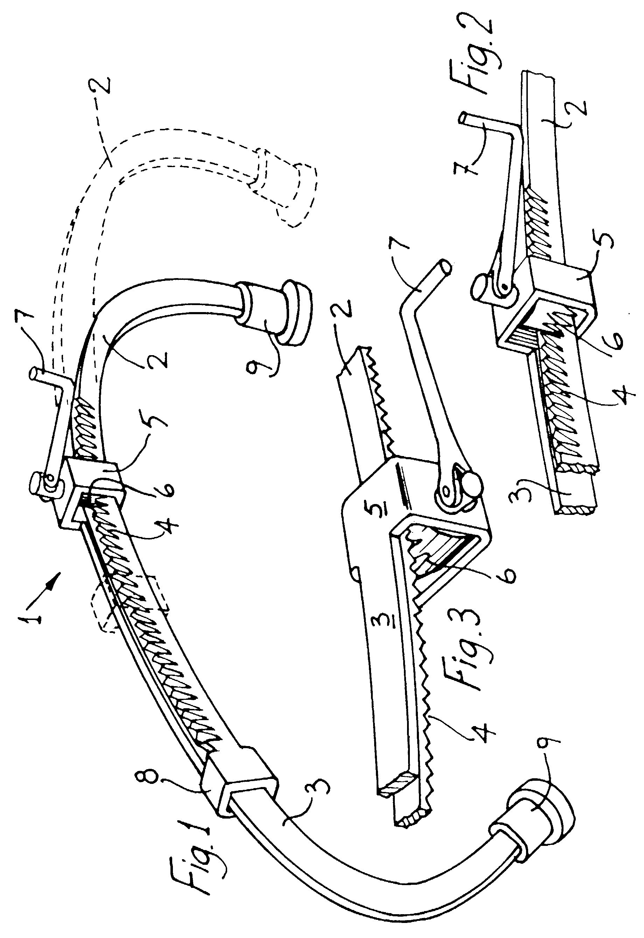

Use of the kick restrainer 20 is as described previously for the kick restrainer of Figs. 1 to 4. It will be noted that the operating handle 26 for the drive pinion 25 folds between the bars 22, 23 when not in use.

It will be appreciated that the animal kick restrainer according to the present invention, has considerable advantages over those heretofore provided.

The invention is not limited to the embodiments hereinbefore described which may be varied in both construction and detail.

## Claims

1. An animal kick restrainer comprising a rigid C-shaped member having two free ends for engagement across an animal's back and under the body adjacent a rear leg and adjustment means for varying the spacing between the ends.

2. An animal kick restrainer as claimed in claim 1 wherein the C-shaped member comprises a pair of overlapping bars with adjustment means engaging between the bars and being operable to slide the bars relative to each other.

3. An animal kick restrainer as claimed in claim 1 or 2 wherein the adjustment means is a rack and pinion mechanism mounted between the bars.

4. An animal kick restrainer as claimed in claim 3, wherein a rack is provided on an inner face of one bar with a drive pinion being mounted on the other bar between the bars engaging the rack.

5. An animal kick restrainer as claimed in claim 3, wherein a rack is provided on an outer face of one bar and a drive pinion is mounted on the other bar in engagement with the rack.

6. An animal kick restrainer as claimed in any of claims 2 to 5 wherein the bars have overlapping flat inner engagement faces.

7. An animal kick restrainer as claimed in any of claims 2 to 6 wherein a bulbous head is provided at an outer free end of each bar.

8. An animal kick restrainer as claimed in any of claims 2 to 7 wherein a resilient cap is provided at an outer free end of each bar.

9. An animal kick restrainer as claimed in any of claims 3 to 8 wherein the drive pinion has an operating handle attached thereto, the operating handle being pivotally attached to the drive pinion for movement between an operating position and a folded stored position against the bars.

10. An animal kick restrainer as claimed in claim 9, wherein the operating handle is nestable between the bars in the stored position.
